(19) **Europäisches Patentamt**

**European Patent Office**

**Office européen des brevets**

(11) **EP 0 833 171 B1**

(12) **EUROPEAN PATENT SPECIFICATION**

(45) Date of publication and mention
of the grant of the patent:
**28.11.2001 Bulletin 2001/48**

(51) Int Cl.⁷: **G01V 1/36**

(21) Application number: **96306983.6**

(22) Date of filing: **25.09.1996**

(54) **Spatially distributed signal sampling method**

Verfahren zum Abtasten von räumlich verteilten Signalen

Procédé d'échantillonnage de signaux spatialement répartis

(84) Designated Contracting States:
**DE FR GB IT NL**

(43) Date of publication of application:
**01.04.1998 Bulletin 1998/14**

(73) Proprietor: **WESTERN ATLAS INTERNATIONAL, INC.**
**Houston, TX 77042-3115 (US)**

(72) Inventor: **Wisecup, Daniel R.**
**Katy, Texas 77450 (US)**

(74) Representative: **Godsill, John Kenneth et al**
**Haseltine Lake & Co.,**
**Imperial House,**
**15-19 Kingsway**
**London WC2B 6UD (GB)**

(56) References cited:
**WO-A-94/12896**          **US-A- 5 396 246**

**Description**

The present invention relates to the field of digital signal processing. More specifically, the present invention is related to a method of digitally sampling a signal so that frequency components are preserved in the sampled signal at a frequency above the fold-over (Nyquist) frequency determined by the digital sampling interval.

Digital signal processing, particularly of electrical signals corresponding to physical phenomena such as acoustic amplitudes, typically includes the step of digitizing the electrical signals. Digitizing is to convert a signal into a series of numbers representing instantaneous amplitudes of the signals sampled at spaced apart time intervals. Preserving substantially all the information contained in the signal requires that the spaced apart time intervals be small enough to adequately sample substantially all the frequencies contained in the signal.

A method of determining the spaced apart interval which enables sampling of substantially all the frequencies contained in a signal is known in the art. The method is typically defined by a relationship referred to in the Shannon Sampling Theorem. The Shannon Theorem states, amongst other things, that the maximum frequency contained in a signal which can be preserved during digital sampling is equal to half the sampling frequency. Expressed in terms of the spaced apart time interval, or sample interval, the theorem states the relationship:

$$f_{max} = \frac{1}{2 \times \Delta t} \qquad (1)$$

$\Delta t$ in this relationship represents the sample interval, and $f_{max}$ is the maximum frequency which can be sampled.

If a signal is sampled at too long a sample interval (too low a frequency) for the frequencies which are contained in the signal, the resulting series of numbers may not faithfully represent the signal because of the presence of inadequately sampled highfrequency content. The presence of inadequately sampled high frequency content typically manifests itself as improperly large amplitudes of some lower frequency components in the digitized signal. This effect is called aliasing.

One method known in the art for reducing aliasing is to limit the upper frequency content of the signal which is actually digitized. Analog low pass (high cut) filters are typically interposed between the signal source and an analog to digital converter to limit the uppermost frequency content of the signal being digitized. One of the problems with analog low pass filters is that the filter response may be such that the input signal is only gradually attenuated by the filter as the frequency increases. In order to have adequate attenuation of signal components at or above the fold-over frequency, the low pass filter typically begins attenuating the signal at about 75 percent of the fold-over frequency. Adequate attenuation typically is defined as about 40-60 dB reduction in amplitude. Because of this characteristic of the analog low pass filter, significant signal information can be lost in the frequency range of 75 to 100 percent of the fold-over frequency.

Another method known in the art for reducing aliasing is to reduce the sample interval so that higher frequencies can be adequately sampled from the signal. As the sample interval is reduced and the sampling frequency thereby increased, the corresponding cut-off frequency of the analog low pass filter can be proportionately increased.

A drawback of reducing the sample interval is that the number of samples in the series of numbers, and therefore the volume of digital data, is directly proportional to the sampling frequency. In some applications, such as geophysical exploration, increasing the sampling frequency can be difficult because of the huge volume of digitized signal data which is generated.

In WO 94/12896, a series of partial stacks are completed with a common depth point gather. This is intended to deal with deviations from the normal moveout curve. However, this document does not discuss preservation of high frequency signal components. Various aspects of the invention are exemplified by the attached claims.

According to one example, a method of preserving frequency components in digitally sampled signals exceeding a maximum frequency related to a predetermined digital sample interval has the following features: the signals correspond to a plurality of sensors positioned at spaced apart locations, and the signals from each of the plurality of sensors are digitally sampled at the predetermined digital sample interval; this example includes the steps of determining a time adjustment value corresponding to each sensor which provide amplitude correspondence between each of the signals generated by each of the sensors in response to different propagation times of energy from an energy source to each of the sensors; adjusting a time of acquisition of each digital sample from each of the sensors by applying the correspondent time adjustment value to the samples from each sensor to generate time-adjusted samples; and combining all the time adjusted samples into a combined output signal having a sampling time interval smaller than the predetermined digital sample interval.

In a preferred embodiment of the invention, the plurality of sensors comprises a plurality of seismic sensors positioned at spaced apart locations. The step of time shifting the signals from each of the plurality of sensors may comprise applying a normal moveout correction to the sampled signals from each of the plurality of seismic sensors, so that samples from sensors to which the moveout correction is applied are positioned in an output buffer in their exact time locations as defined by the normal moveout correction. The step of combining the signals from the plurality of seismic sensors may comprise generating a common midpoint (CMP) trace stack of the time-adjusted signals from the plurality of seismic sensors.

For a better understanding of the invention, and to show how the same may be carried into effect, reference will now be made, by way of example, to the accompanying drawings, in which:-

Figure 1 shows a data arrangement configuration for a seismic recording including a seismic source and a plurality of receivers;
Figure 2 shows seismic recordings generated by each of the plurality of receivers in the arrangement of Figure 1;
Figure 3 shows how individual signals from the plurality of receivers in Figure 1 are digitally sampled and stacked by application of normal moveout;
Figure 4 shows a result of two reference signals being reflected from a simulated seismic reflector in an experiment;
Figure 5 shows the various frequency contents of the energy sources used in the experiment;
Figure 6 shows the results of the experiment;
Figure 7 shows the frequency content of the resultant from the experiment;
Figure 8 shows the phase spectrum of the resultant from the experiment;
Figure 9 shows a further experiment in which the effect of a wavelet stretch artifact of the normal moveout correction is removed;
Figure 10 shows the frequency content of the resultant of the experiment depicted in Figure 9;
Figure 11 shows the phase spectrum of the resultant of the experiment depicted in Figure 9;
Figures 12A to 12D show the results of processing seismic survey data compared with the results of processing the seismic survey with a prior method; and
Figure 13 is a flow chart of a method.

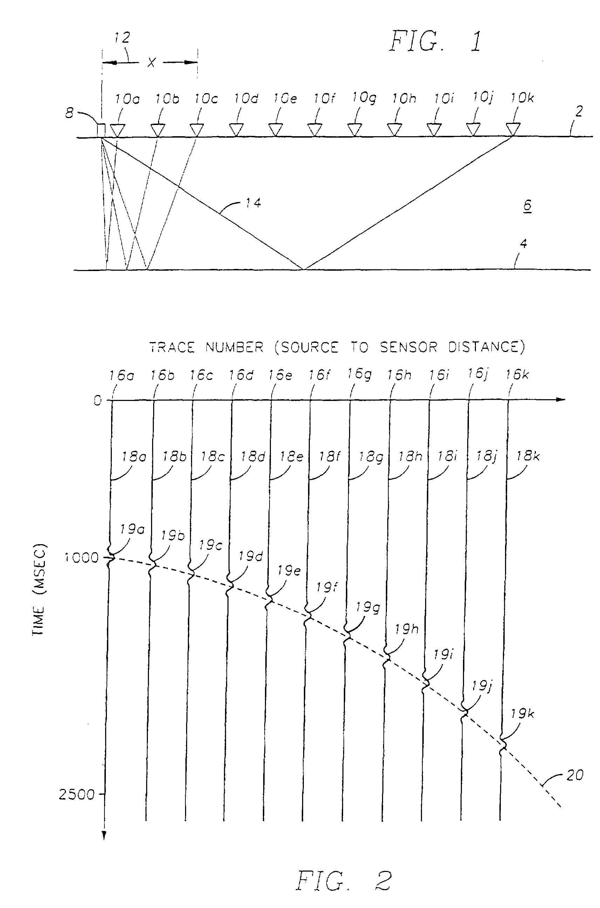

Figure 1 shows a typical arrangement of a seismic energy source and seismic sensors used to record a seismic survey. A seismic energy source 8 is located on the earth's surface 2. A plurality of seismic sensors 10a to 10k is positioned at spaced apart locations from the source 8 along the earth's surface 2. In a marine seismic survey, the source 8 and the sensors 10a to 10k can be positioned near the water surface. Alternatively, in certain types of marine seismic surveys, the sensors 10a to 10k can be positioned on the sea bottom.

Each sensor in the plurality of sensors 10a to 10k is located at a different, unique distance 12 from the source 8. The distance 12 is referred to by the variable "**X**". Periodically the source 8 is energized so that the earth 6 is illuminated with acoustic energy. The acoustic energy radiates from the source 8 in a substantially spherical pattern until it strikes an acoustic impedance discontinuity 4, also referred to as a reflector. Some of the acoustic energy reflects back toward the earth's surface 2 where it is detected by the sensors 10a to 10k. The length of a travel path 14 followed by the acoustic energy as it travels from the source 8 to any one of the sensor 10a to 10k typically increases as the distance 12 increases. The relationship between distance 12 and length of the path 14 can be expressed in terms of the amount of time taken for acoustic energy to travel from the source 8 to any sensor in the plurality of sensors 10a to 10k. This relationship can be approximated by the expression:

$$T_x^2 = T_0^2 + \frac{X^2}{V^2} \qquad (2)$$

where X represents the distance 12 as previously defined, $T_x$ is the acoustic energy travel time from the source 8 to one sensor having the distance 12 equal to X, V is a velocity term referred to as the effective normal moveout velocity, and $T_o$ is the acoustic energy travel time to the sensor 10a having a distance 12 substantially equal to zero, also called the zero-offset sensor.

Figure 2 is a graphic representation of amplitudes of electrical signals corresponding to each one of the plurality of sensors 10a to 10k. The signals corresponding to the sensors 10a to 10k are displayed as traces 18a to 18k, respectively. The traces 18a to 18k each have a position along the horizontal axis of the graphic display corresponding to the location along the earth's surface 2 of the particular sensor 10a to 10k which generated the particular signal. The vertical axis of the graph represents time. Signal amplitude is represented by the amount of rightward or leftward deflection from a vertical line passing through the horizontal axis position of each of the traces 18a to 18k. Each trace 18a to 18k in Figure 2 can be individually identified by a trace number 16a to 16k, usually beginning with trace number zero corresponding to the trace 18a generated by the zero-offset sensor 10a.

The example of Figure 2 is based on a simulated acoustic energy impulse which takes 1,000 milliseconds to travel from the source 8 to the reflector (shown as 4 in Figure 1) and back to the zero-offset sensor 10a. The travel time of the impulse to the zero-offset sensor 10a can be observed as a signal wavelet 19a on trace number zero 16a which has a central peak occurring at about 1,000 milliseconds. Corresponding signal wavelets 19b to 19k occur at successively longer times in the signal traces 18b to 18k corresponding to the other sensors 10b to 10k. As the distance 12 increases, the time at which the signal wavelets 19b to 19k occur in the other traces 18b to 18k increases substantially according to the relationship described in equation **(2)**.

Typically the wavelets 19a to 19k will be displayed at times generally falling on a curve 20 called the normal moveout curve. The normal moveout curve 20 is a continuous solution to the relationship defined by equation **(2).**

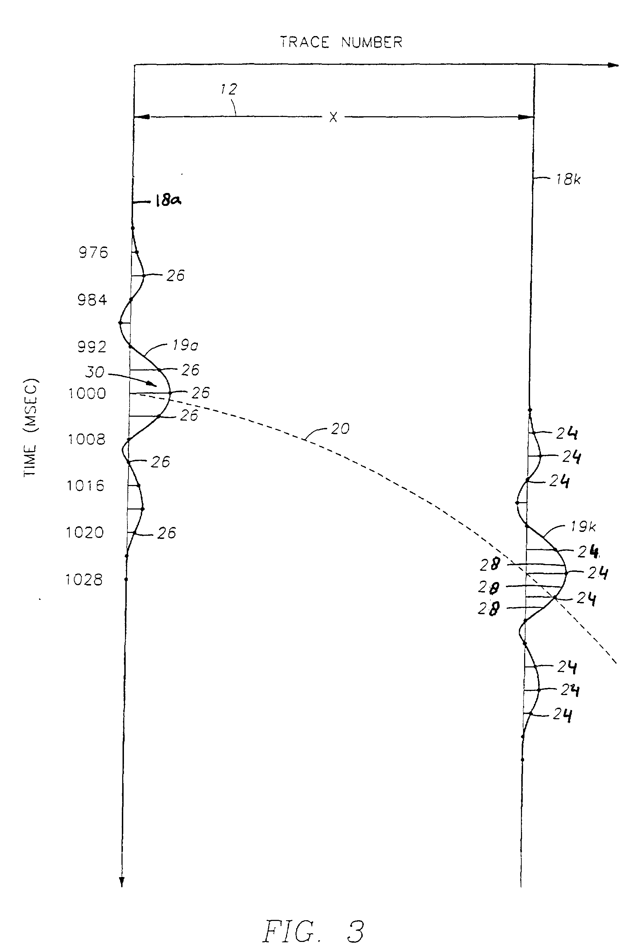

Turning now to the present embodiment, it can be better understood by referring to Figure 3. The traces (18a to 18k in Figure 2), which represent signals from the sensors, in the example of Figure 3 again represent a reflector 4 having an acoustic two-way travel time to the zero offset sensor 10a of 1,000 milliseconds.

In a typical seismic survey, acoustic signals at each of the sensors 10a to 10k are digitized. During digitization of the signals, individual samples are taken at spaced apart time intervals of the signals generated by the sensors 10a to 10k. The samples are generally shown at 26 for the zero-offset sensor 10a, and at 28 for the other sensors 10b to 10k. In the example of Figure 3 the samples 26 and 28 typically are taken at a predetermined time interval of four milliseconds and are taken at substantially coincident times, that is, all the sensors 10a to 10k are simultaneously sampled every four milliseconds.

During processing of the digitized signals from the plurality of sensors 10a to 10k, a common-mid-point, or CMP, stack can be generated by combining the digitized signals from each of the sensors 10a to 10k to form a combined output signal. The combined output signal is generated in order to improve signal-to-noise ratio relative to the signals from individual sensors 10a to 10k. In order for the combined signal to have improved signal-to-noise ratio, signal combination must occur so that amplitude correspondent portions of signals from each of the sensors 10a to 10k, such as the peaks of the wavelets 19a to 19k, are combined. In generating the combined signal, however, amplitude correspondent points, which are shown generally at 24 on the non-zero offset traces 18b to 18k, may occur at times other than times at which digital samples are taken, the sample times being shown generally at 28 as previously discussed. In the present embodiment of the invention, all the digital samples 28 in each of the non-zero offset traces 18b to 18k are time-shifted by a time value which exactly satisfies the relationship of equation **(2)** corresponding to the source-to-sensor distance (X) for each of the non-zero offset sensors 10b to 10k.

The time values for time-shifting each of the non-zero offset traces 18b to 18k are calculated to the degree of precision to which a computer (not shown) which performs the calculations is capable. The time-shifted samples 28 are stored in a buffer, which can form part of the computer memory. The combination in the buffer of the samples 26 from the zero-offset trace 18a and the time shifted samples 28 from the non-zero offset traces 18b to 18k forms a combined signal having a total number of signal samples which is much larger than the number of digital samples taken over any predetermined time interval in the zero-offset trace 18a. For example, the eleven sensors in the example of Figure 1 could provide as many as 44 individual samples stored in the buffer for every four samples taken from the zero offset sensor 10a. Since the time values for the samples in the combined signal are calculated to the arithmetic precision of the computer, time-coincidence of any two individual samples is unlikely. The contents of the buffer typically will contain a total number of samples equal to the product of the number of sensors multiplied by the number of samples from a single sensor.

The contents of the buffer also can form a stacked single-sensor signal sampled at the equivalent of a much smaller time interval than the predetermined time interval at which the samples 26 and 28 were originally taken.

The actual time intervals between individual digital samples stored in the output buffer will typically not be uniform because the normal moveout correction is not linear. However, uniform time spacing of the samples is not required in order to adequately sample higher frequency components of a signal. Adequate signal sampling only requires sufficient sample density over any time interval to satisfy the relationship described in equation **(1)**. The highest frequency which can be adequately sampled by this method depends primarily on the number of traces 18a to 18k from which digital samples are transferred to the buffer, and the predetermined time interval at which the sensors 10a to 10k are originally sampled. The theoretical maximum frequency that may be adequately sampled in any particular recording arrangement by such a method can be described by the relationship:

$$f_{max} = \frac{N}{2 \times \Delta t} \qquad (3)$$

where $f_{max}$ is the maximum frequency, $N$ is the number of traces, or sensor input channels, written to the output buffer, and $\Delta t$ is the input sample interval.

In the present embodiment of the invention an evenly-sampled output curve, having uniform time intervals between samples, can be generated by interpolation of the samples in the buffer using a windowed moving average filter or similar filter, as will be described in test results hereinafter. It is contemplated that other types of interpolation filters such as median filters or polynomial filters could also be used to generate an evenly-sampled output curve.

TEST RESULTS

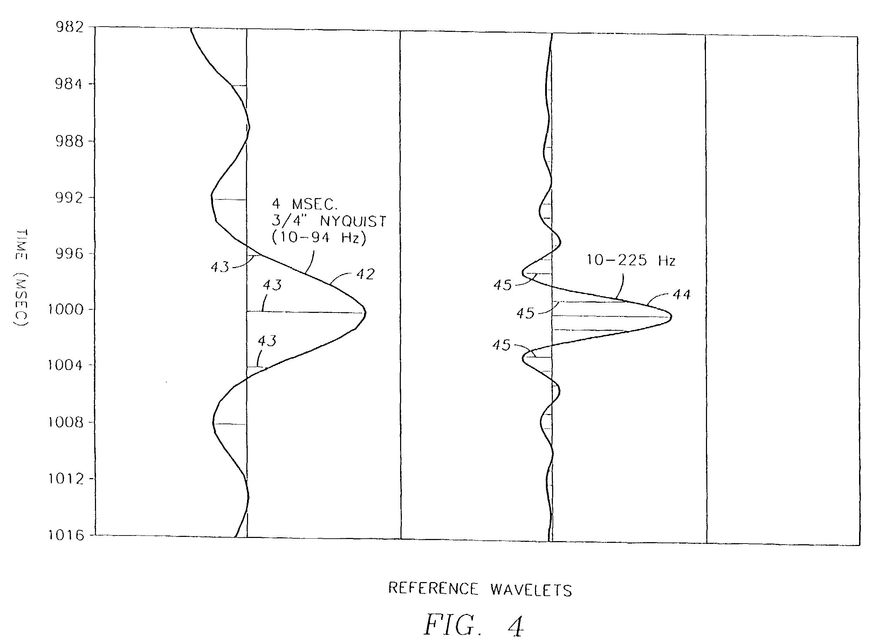

A model seismic data set having normal moveout was produced using a simulated flat reflector having a two-way time ($T_0$) at the zero offset sensor 10a of 1,000 milliseconds and a simulated earth above the simulated reflector having an acoustic velocity of 2,438 m/sec (8,000 feet per second). The simulated earth 6 and reflector 4 were convolved with a 10-225 Hz seismic energy wavelet, shown generally at 44 in Figure 4, to produce simulated acoustic sensor signals representing various amounts of source-to-sensor distance 12. The same simulated earth 6 and reflector 4 were also convolved with a simulated 10-94 Hz wavelet and combined to form a CMP trace stack using a method known in the prior art for comparison with the present method.

Figure 4 shows a comparison of the two simulated acoustic energy wavelets. The 10-225 Hz wavelet is generally shown at 44. Digital samples of the 10-225 Hz wavelet were taken at 1 millisecond intervals and are generally shown at 45. A digital sampling time interval of 1 millisecond can preserve frequencies up to 500 Hz in a single-sensor arrangement, as determined by the relationship defined in equation **(1)**. The 10-94 Hz wavelet, called the low-frequency wavelet, shown at 42 and sampled at a predetermined time interval of 4 milliseconds, represents the 10-225 Hz wavelet 44 after filtering by a 75% Nyquist filter. The 75% Nyquist filter has a -3dB response at a frequency of 94 Hz, and a -36 dB response at a frequency of 120 Hz. These responses represent an appropriate roll-off for an anti-alias filter used with a digital sample interval of 4 milliseconds. Digital samples of the low-frequency wavelet 42 were then taken at 4 millisecond intervals, as shown at 43. The lower-frequency wavelet 42 was later used to simulate a CMP trace stack comprising simulated traces sampled at a predetermined time interval of 4 milliseconds. The 4 millisecond time interval would preserve a maximum frequency of 125 Hz using the method of the prior art.

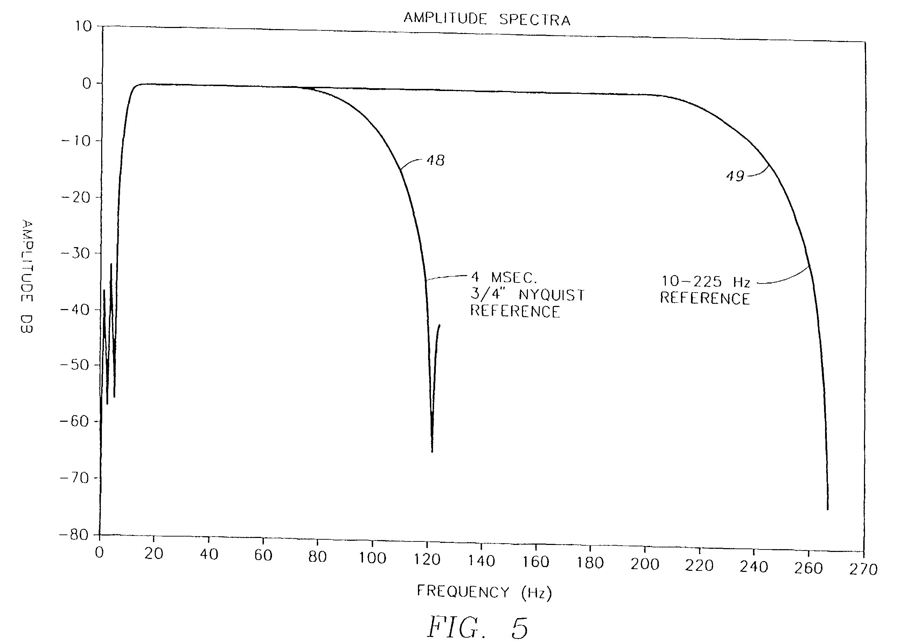

Figure 5 shows the amplitudes of the various frequency components of the low-frequency wavelet, shown generally at 48, and frequency components of the 10-225 Hz wavelet, shown generally at 49.

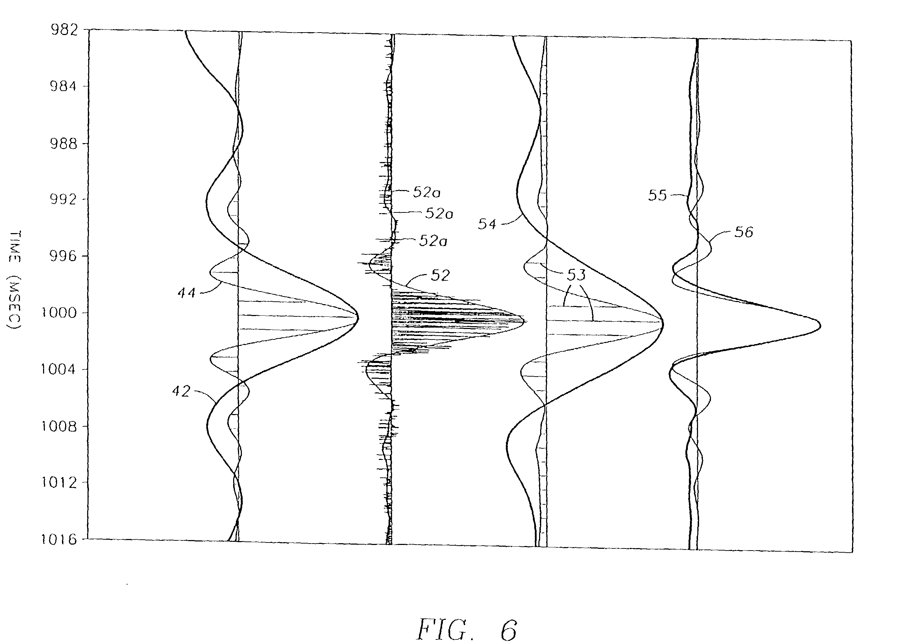

Figure 6 shows a comparison of the results of the CMP stack using the method of the prior art with the results of the CMP stack generated by the present method.

The CMP stack using the method known in the prior art, shown at 54, was formed by convolving the 10-94 Hz wavelet 42 with the simulated reflector 4, sampling the simulated sensor outputs at a 4 millisecond interval, interpolating the digital samples corresponding to the simulated sensors so that the amplitude correspondent points in the simulated offset traces would have time-correspondent samples, then applying the normal moveout correction to the interpolated samples and presenting the result as a stacked, single-trace waveform, as shown at 54.

A CMP stack generated by using the present method is shown at 52. Simulated sensor outputs representing the 10-225 Hz wavelet reflecting from the simulated reflector 4 were sampled at the 4 millisecond interval. No anti-alias filter was applied to the simulated sensor outputs corresponding to the simulated reflection of the 10-225 Hz wavelet. A normal moveout correction was then applied to the samples of the simulated sensor outputs so as to place the moveout corrected samples in time positions in the output buffer having exact amplitude correspondence with the simulated output samples corresponding to the zero-offset sensor in the simulation. The result of applying the normal moveout correction to the simulated samples is shown as individual samples generally shown at 52a. The magnitudes of the individual samples, and their relative time positions, can be seen as any one of a large number of horizontal lines of differing lengths which together form a rough outline of a CMP stacked trace produced shown at 52. The CMP stacked trace produced according to the present method, shown as the smooth curve at 52, was formed by applying a windowed moving average filter to the samples present in the output buffer. The smooth curve 52 resulting from the application of the moving average filter was then resampled into evenly spaced digital samples having a 1 millisecond time interval, as shown at 53. The result of the CMP stacked trace formed from the uniformly time-spaced 4 millisecond samples and the low-frequency wavelet 42 using the stacking method of the prior art is shown for comparison as a smooth curve 54.

The CMP stacked trace generated by this method, as shown again at 55, is compared with the original 10-225 Hz wavelet shown at 56. The present method visually appears to have preserved much of the higher frequency content of the 10-225 Hz wavelet, even though the individual simulated sensor outputs were sampled at the previously described 4 millisecond time interval. A 4 millisecond sampling time interval would preserve frequencies only up to 125 Hz using the method known in the prior art.

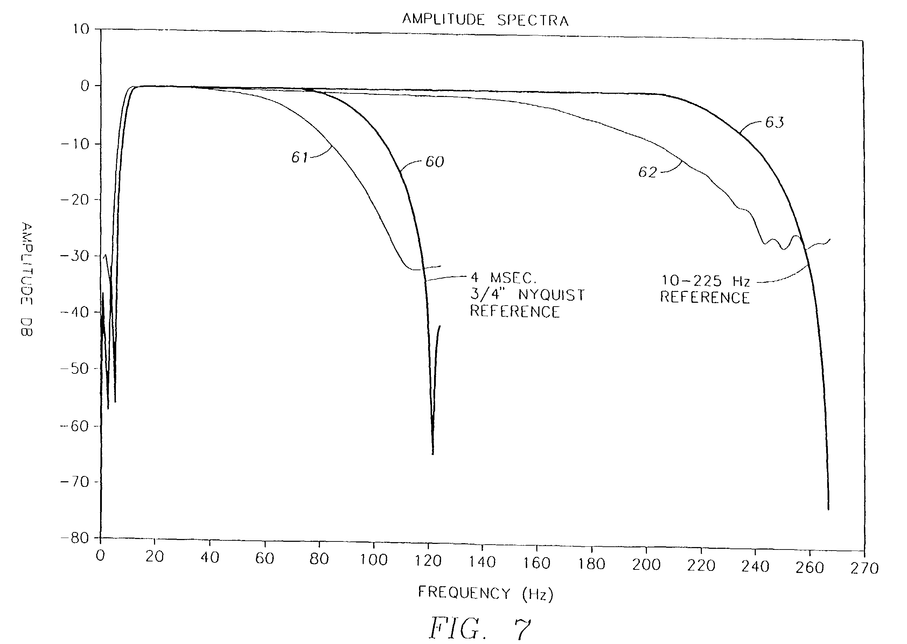

Figure 7 shows amplitude spectra of the CMP stacked trace generated by the present method, shown as a curve at 62, compared with the 10-225 Hz wavelet shown as a curve at 63. The visual interpretation of the correspondence of the stack 55 with the wavelet 56 of Figure 6 is confirmed by examination of the amplitude spectra shown in Figure 7. Amplitude spectra from a CMP stacked trace using the method of the prior art, shown at 61, and the 10-94 Hz low-frequency wavelet, shown at 60, are displayed for comparison with the CMP stacked trace calculated by the present method.

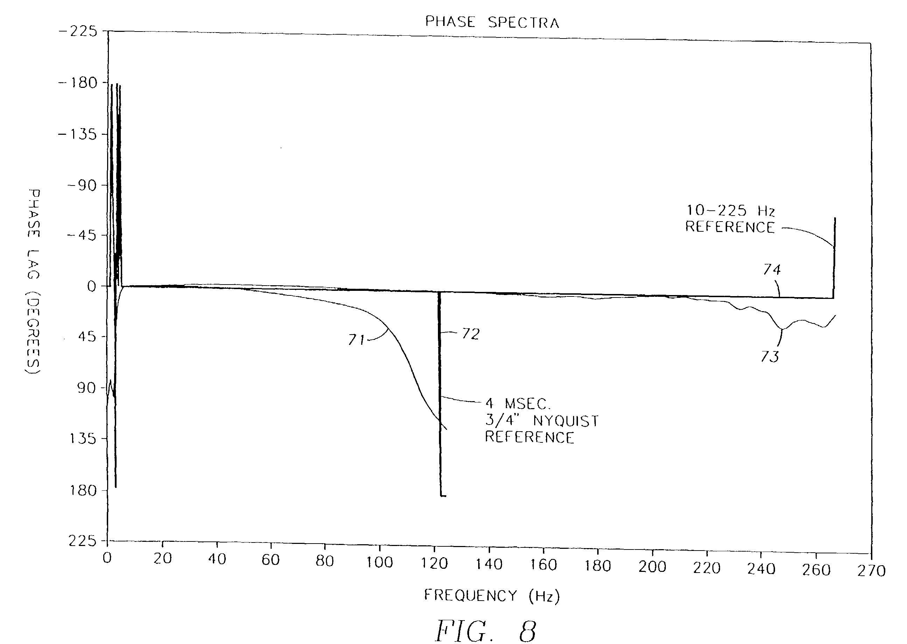

Figure 8 shows phase spectra corresponding to the amplitude spectra shown in Figure 7. The CMP stacked trace formed by the present method, shown by its phase response curve at 73, appears to remain closer to zero phase throughout its frequency range than does the phase response curve 71 of the CMP stacked trace generated by the method of the prior art. The phase response curve of the 10-94 Hz wavelet is shown at 72. The phase response curve of the 10-225 Hz wavelet is shown at 74.

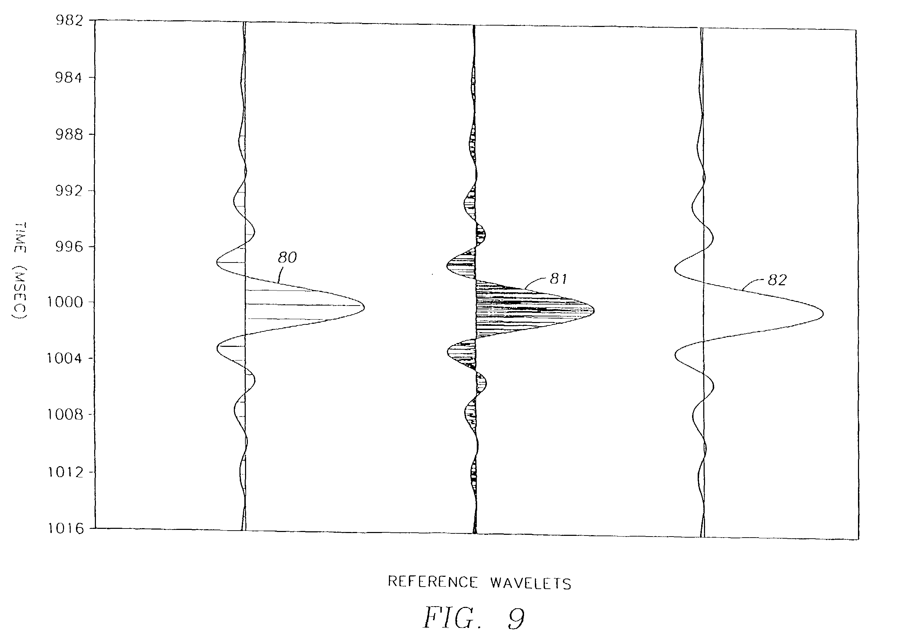

Figure 9 shows simulated results of a CMP stacked trace formed according to the present method when the effects of wavelet stretch are eliminated. Wavelet stretch occurs as a result of applying the normal moveout correction because the normal moveout correction is exact at only one value of time for each value of source-to-sensor offset. Because a wavelet, such as the 10-225 Hz wavelet shown at 80, typically traverses a time span of several milliseconds, some portions of the wavelet will be incorrectly adjusted for normal moveout since they do not occur at the time at which the normal moveout correction is exact. The 10-225 Hz wavelet shown at 80, and a stretch corrected CMP stacked trace computed by the present method, shown at 81, are compared in Figure 9. An overlay comparison of the CMP stacked trace calculated by the present method with the 10-225 Hz wavelet is shown at 82.

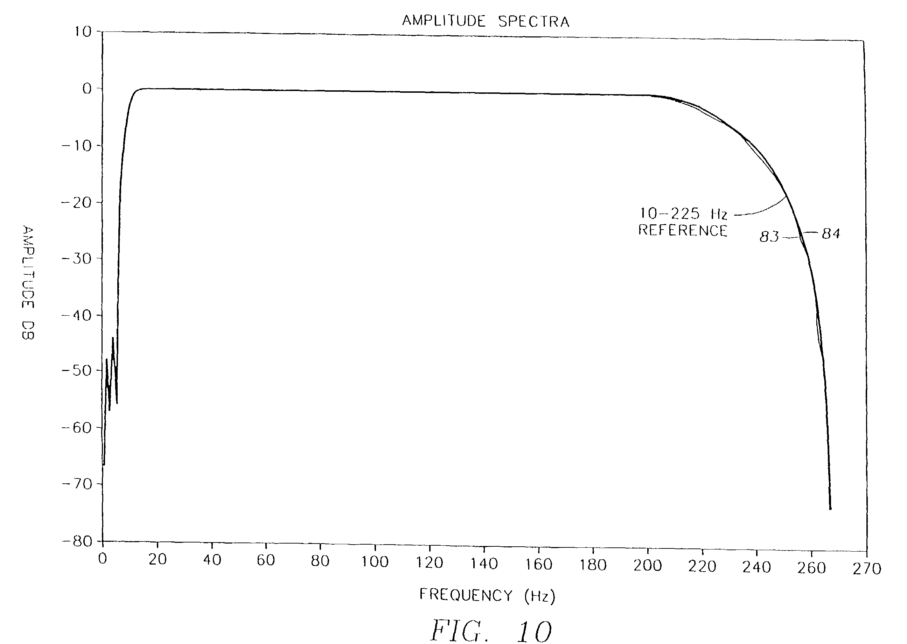

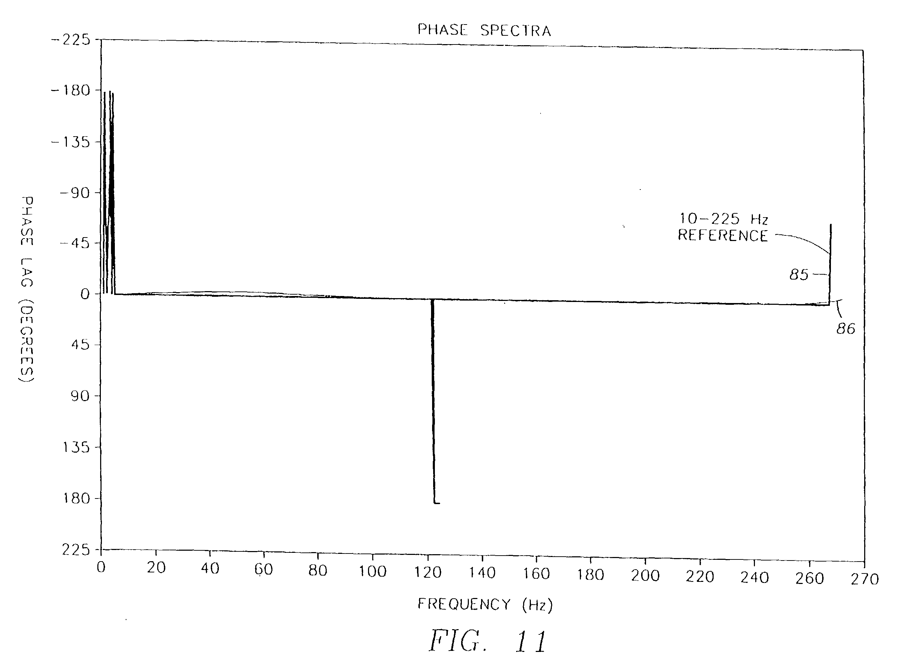

Figure 10 shows a comparison of amplitude spectra of the 10-225 Hz wavelet, shown at 84, with the CMP stacked trace calculated by the present method and corrected for wavelet stretch, as shown at 83. Figure 11 shows phase spectra, corresponding to the amplitude spectra shown in Figure 10, of the CMP stacked trace calculated by the present method at 86, and the 10-225 Hz wavelet at 85.

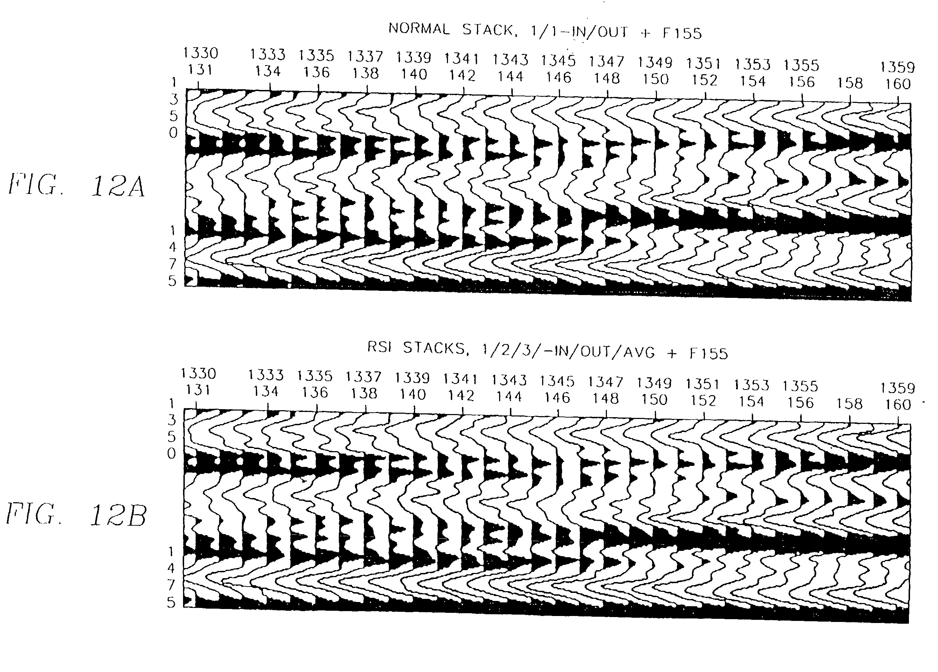

Figures 12A to 12D show a comparison of CMP stacked traces formed by the present method, compared with CMP stacked traces formed by the method of the prior art, as applied to actual marine seismic survey data. Figure 12A shows stacked traces calculated by the method of the prior art using data digitally sampled at a 1 millisecond interval, and having a 155 Hz high cut filter applied to the output before display. Figure 12B shows CMP stacked traces from the same data calculated by the present method.

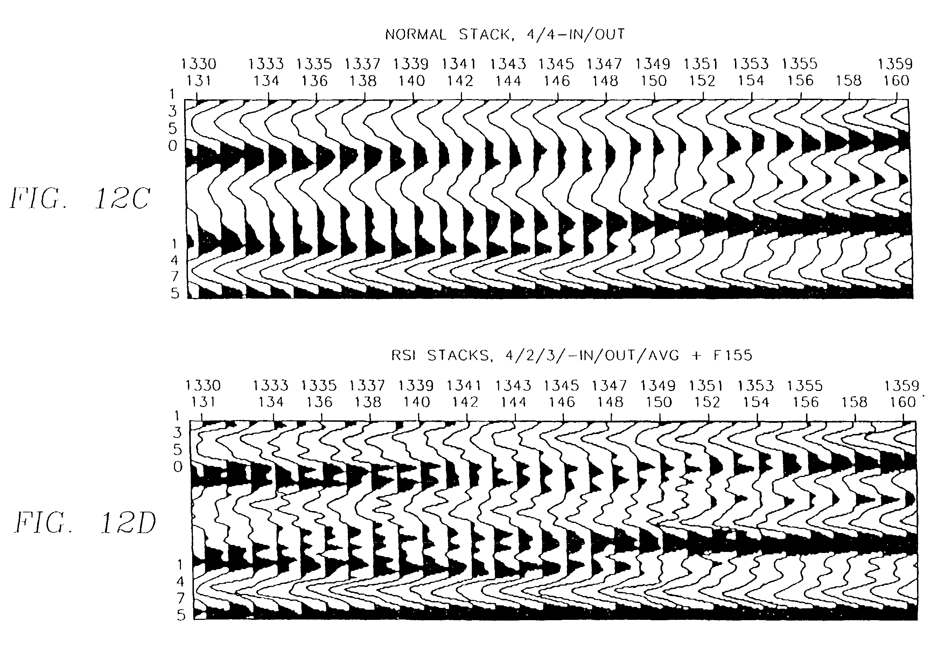

Figure 12C shows the same data set as in Figure 12A having been anti-alias filtered with a 94 Hz (75% Nyquist/125 Hz high cut) filter and resampled to a sampling time interval of 4 milliseconds, and then calculated into CMP stacked traces by the method of the prior art. Figure 12D shows the same data set as in Figure 12A resampled to a sampling interval of 4 milliseconds without application of an anti-alias filter, and processed by the present method. Comparison of resampled data in Figure 12D processed by the present method visually displays a high degree of correspondence with the data of Figure 12A sampled at a much smaller sampling time interval.

It is to be understood that the preferred embodiment of the present invention can be applied to any sensor system having a plurality of sensors positioned at spaced apart locations from which sensor system digital samples are made of the sensor outputs at a predetermined time interval.

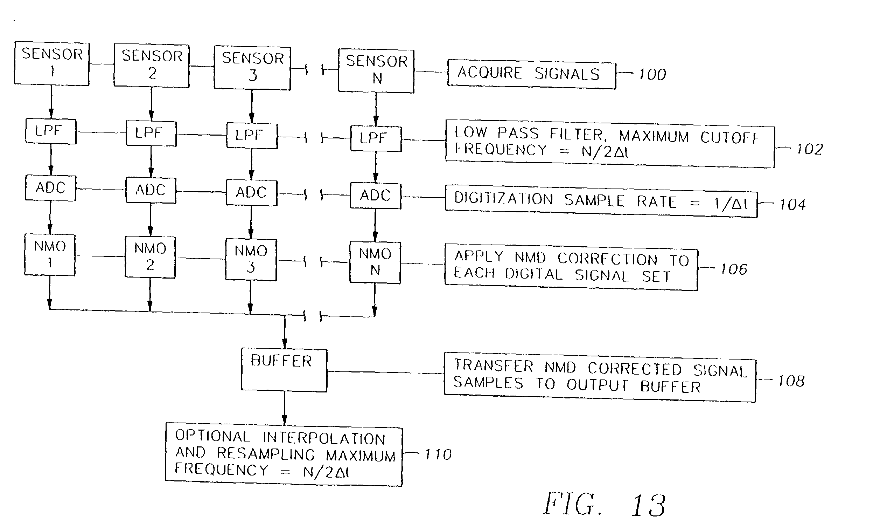

The preferred embodiment of the present invention can be better understood by referring to the flow chart in Figure 13. The sensors, as previously explained, are positioned at spaced apart locations. Signals are acquired at 100. The sensor signals are low pass filtered at 102. Low pass filtering 102, which in the prior art was limited to a cutoff frequency of $1/2\Delta t$, in the present example is limited to a theoretical maximum of $N/2\Delta t$. $\Delta t$ represents the time interval between generation of digital signal samples, which is next performed on the low pass-filtered signals at 104. Digitized signals are corrected for normal moveout (NMO) at 106. The NMO correction is calculated to the arithmetic precision of the computer which performs the NMO correction. The NMO corrected signals are then transferred to the output buffer at 108. The output buffer will typically contain $NT/\Delta t$ digital signal samples for a signal time interval $T$ over which the NMO correction has been performed. Optionally, as shown at 110, the samples in the buffer, which will typically not be evenly spaced in time as a result of the NMO correction, can be interpolated and resampled. The theoretical maximum frequency which is preserved in the signal samples is $1/2\Delta t$.

By providing non-time-coincident digital signal samples from a plurality of sensors, one preserves frequency components in the digitized signals above the maximum frequency related to the digital sampling rate.

## Claims

1. A method of preserving frequency components exceeding the Nyquist frequency in digitally sampled signals, said signals corresponding to data from a plurality of sensors positioned at spaced apart locations, said method comprising the steps of:

   generating time adjusted digital samples corresponding to each of said plurality of sensors, said time adjusted digital samples generated to provide amplitude correspondence between each of said signals generated substantially by each of said plurality of sensors in response to different propagation times of energy from an energy source to each of said plurality of sensors; and
   combining all of said time adjusted digital samples into a combined signal by positioning all of said time-adjusted digital samples substantially exactly in their adjusted time positions, such that said combined signal has a total number of samples greater than the number of samples in a single sensor signal.

2. A method according to claim 1 and comprising the step of digitising said signals prior to the step of time adjusting.

3. A method as claimed in claim 1 or 2, comprising the step of interpolation upon all of said time adjusted digital samples, thereby generating a uniformly sampled output signal.

4. A method according to any one of the preceeding claims wherein the step of time adjusting comprises applying a normal moveout correction to said digitally sampled signals.

5. A method according to any one of the preceeding claims comprising low pass filtering said signals at a high cutoff frequency limited to the product of the number of said sensors and one-half said digital sampling frequency.

6. A method as claimed in claim 1 further comprising obtaining said signals by steps of:

> (i) positioning a plurality of seismic sensors at said spaced apart locations;
> (ii) positioning seismic energy source in the vicinity of said plurality of sensors;
> (iii) activating said seismic energy source; and
> (iv) causing said seismic sensors to detect seismic energy reflecting from within the earth, thereby generating signals at said seismic sensors;

> and wherein generating said time adjusted signals further comprises applying a normal moveout correction related to a distance between said source and each of said sensors.

7. A method as claimed in claim 6 further comprising the step of interpolating said output series, thereby generating a uniformly sampled output series.

8. A method as claimed in claim 6 further comprising low pass filtering said signals at a high cutoff frequency limited to the product of the number of said sensors and one-half said digital sampling frequency.

**Patentansprüche**

1. Verfahren zur Sicherung von die Nyquist-Frequenz überschreitenden Frequenzkomponenten in digital abgetasteten Signalen, wobei die Signale Daten von einer Mehrzahl an Sensoren entsprechen, die an voneinander beabstandeten Orten positioniert sind, mit den Schritten:

> Erzeugen von zeitlich festgelegten, digitalen Proben, entsprechend jedem der Sensoren, wobei die zeitlich festgelegten, digitalen Proben erzeugt werden, um eine Amplituden-Zuordnung zwischen jedem der Signale bereitzustellen, die im wesentlichen durch jeden der Sensoren erzeugt werden infolge von verschiedenen Ausbreitungszeiten der Energie von einer Energiequelle zu jedem der Sensoren; und Kombinieren aller zeitlich festgelegter, digitaler Proben zu einem Kombinationssignal durch Positionieren aller zeitlich festgelegten, digitalen Proben im wesentlichen exakt in deren festgelegte Zeitpositionen, so daß das Kombinationssignal eine Gesamtzahl an Proben aufweist, die größer als die Anzahl der Proben in einem einzelnen Sensorsignal ist.

2. Verfahren nach Anspruch 1, **dadurch gekennzeichnet, daß** die Signale vor der zeitlichen Abstimmung digitalisiert werden.

3. Verfahren nach Anspruch 1 oder 2, **gekennzeichnet durch** Interpolieren aller zeitlich festgelegten, digitalen Proben, um ein einheitlich abgetastetes Ausgangssignal zu erzeugen.

4. Verfahren nach einem der vorstehenden Ansprüche, **dadurch gekennzeichnet, daß** das zeitliche Abstimmen eine Normal-Auswärtsbewegungs-Korrektur (NMO-Korrektur) der digital abgetasteten Signale umfaßt.

5. Verfahren nach einem der vorstehenden Ansprüche, **gekennzeichnet durch** Tiefpaßfiltern der Signale bei einer hohen Grenzfrequenz, die auf das Produkt zwischen der Anzahl der Sensoren und der Hälfte der digitalen Abtastfrequenz beschränkt ist.

6. Verfahren nach Anspruch 1, **dadurch gekennzeichnet, daß** das Erhalten der Signale folgende Schritte umfaßt:

> (i) Positionieren einer Mehrzahl seismischer Sensoren an den voneinander beabstandeten Orten;
> (ii) Positionieren einer seismischen Energiequelle in der Umgebung der Mehrzahl an Sensoren;
> (iii) Aktivieren der seismischen Energiequelle; und
> (iv) Detektieren der seismischen Energie, die aus der Erde reflektiert wird, mittels der seismischen Sensoren, womit bei den seismischen Sensoren die Signale erzeugt werden;

und wobei das Erzeugen der zeitlich abgestimmten Signale eine Normal-Auswärtsbewegungs-Korrektur, bezogen auf einen Abstand zwischen der Quelle und jedem der Sensoren, umfaßt.

7. Verfahren nach Anspruch nach Anspruch 6, **gekennzeichnet durch** den Schritt Interpolieren der Ausgangsfolge, womit eine einheitlich abgetastete Ausgangsfolge erzeugt wird.

8. Verfahren nach Anspruch 6, **gekennzeichnet durch** Tiefpassfiltern der Signale bei einer hohen Grenzfrequenz, die auf das Produkt zwischen der Anzahl der Sensoren und der Hälfte der digitalen Abtastfrequenz beschränkt ist.

## Revendications

1. Procédé pour préserver des composantes de fréquence dépassant la fréquence de Nyquist dans des signaux échantillonnés numériquement, lesdits signaux correspondant à des données provenant d'une pluralité de capteurs positionnés en des emplacements espacés, ledit procédé comprenant les étapes dans lesquelles :

   on génère des échantillons numériques ajustés dans le temps correspondant à chacun de ladite pluralité de capteurs, lesdits échantillons numériques ajustés dans le temps générés pour produire une correspondance d'amplitude entre chacun desdits signaux générés sensiblement par chacun de ladite pluralité de capteurs en réponse à des temps de propagation différents d'une énergie provenant d'une source d'énergie jusqu'à chacun de ladite pluralité de capteurs ; et
   on combine la totalité desdits échantillons numériques ajustés dans le temps en un signal combiné en positionnant la totalité desdits échantillons numériques ajustés dans le temps sensiblement exactement dans leurs positions temporelles ajustées, afin que ledit signal combiné ait un nombre total d'échantillons supérieur au nombre d'échantillons d'un signal de capteur unique.

2. Procédé selon la revendication 1 et comprenant l'étape de numérisation desdits signaux avant l'étape d'ajustement dans le temps.

3. Procédé selon la revendication 1 ou 2, comprenant l'étape d'une interpolation portant sur la totalité desdits échantillons numériques ajustés dans le temps, générant ainsi un signal de sortie échantillonné uniformément.

4. Procédé selon l'une quelconque des revendications précédentes, dans lequel l'étape d'ajustement dans le temps comprend l'application d'une correction de courbure normale auxdits signaux échantillonnés numériquement.

5. Procédé selon l'une quelconque des revendications précédentes, comprenant le fait de soumettre à un filtrage passe-bas lesdits signaux à une fréquence de coupure élevée limitée au produit du nombre desdits capteurs et d'une moitié de ladite fréquence d'échantillonnage numérique.

6. Procédé selon la revendication 1, comprenant en outre l'obtention desdits signaux par les étapes dans lesquelles :

   (i) on positionne une pluralité de capteurs sismiques auxdits emplacements espacés ;
   (ii) on positionne une source d'énergie sismique au voisinage de ladite pluralité de capteurs ;
   (iii) on active ladite source d'énergie sismique ; et
   (iv) on amène lesdits capteurs sismiques à détecter une énergie sismique revenant par réflexion de l'intérieur de la terre, générant ainsi des signaux auxdits capteurs sismiques ;

   et dans lequel la génération desdits signaux ajustés dans le temps comprend en outre l'application d'une correction de courbure normale associée à une distance entre ladite source et chacun desdits capteurs.

7. Procédé selon la revendication 6, comprenant en outre l'étape d'interpolation de ladite série de sorties, générant ainsi une série de sorties échantillonnées uniformément.

8. Procédé selon la revendication 6, comprenant en outre le fait de soumettre à un filtrage passe-bas lesdits signaux à une fréquence de coupure élevée limitée au produit du nombre desdits capteurs et de la moitié de ladite fréquence d'échantillonnage numérique.

*FIG. 1*

TRACE NUMBER (SOURCE TO SENSOR DISTANCE)

TIME (MSEC)

*FIG. 2*

FIG. 3

REFERENCE WAVELETS

*FIG. 4*

## AMPLITUDE SPECTRA

48

49

4 MSEC.
3/4" NYQUIST
REFERENCE

10-225 Hz
REFERENCE

FREQUENCY (Hz)

AMPLITUDE DB

*FIG. 5*

EP 0 833 171 B1

FIG. 6

AMPLITUDE SPECTRA

FIG. 7

PHASE SPECTRA

FIG. 8

EP 0 833 171 B1

REFERENCE WAVELETS

FIG. 9

FIG. 10

PHASE SPECTRA

FIG. 11

EP 0 833 171 B1

FIG. 12A

FIG. 12B

NORMAL STACK, 4/4-IN/OUT

FIG. 12C

RSI STACKS, 4/2/3/-IN/OUT/AVG + F155

FIG. 12D

EP 0 833 171 B1

EP 0 833 171 B1

| SENSOR 1 | SENSOR 2 | SENSOR 3 | | SENSOR N | ACQUIRE SIGNALS — 100 |

| LPF | LPF | LPF | | LPF | LOW PASS FILTER, MAXIMUM CUTOFF FREQUENCY = N/2Δt — 102 |

| ADC | ADC | ADC | | ADC | DIGITIZATION SAMPLE RATE = 1/Δt — 104 |

| NMO 1 | NMO 2 | NMO 3 | | NMO N | APPLY NMO CORRECTION TO EACH DIGITAL SIGNAL SET — 106 |

BUFFER — TRANSFER NMO CORRECTED SIGNAL SAMPLES TO OUTPUT BUFFER — 108

OPTIONAL INTERPOLATION AND RESAMPLING MAXIMUM FREQUENCY = N/2Δt — 110

FIG. 13